# FASCICULE DE BREVET EUROPEEN

(11) **EP 4 244 136 B1**
(45) Date de publication et mention de la délivrance du brevet: **14.02.2024**
(21) Numéro de dépôt: 21802372.9
(22) Date de dépôt: 08.11.2021
(51) Int. Cl.: B64D 27/24, B64D 35/08, B64D 43/00, B64D 27/02

(54) **PROCÉDÉ DE DÉTERMINATION D'AU MOINS UNE LIMITE DE PUISSANCE D'UNE CHAINE PROPULSIVE HYBRIDE POUR VÉHICULE DE TRANSPORT, EN PARTICULIER, UN AÉRONEF**
VERFAHREN ZUR BESTIMMUNG MINDESTENS EINER LEISTUNGSGRENZE EINES HYBRIDANTRIEBSSTRANGS FÜR EIN TRANSPORTFAHRZEUG, INSBESONDERE EIN FLUGZEUG
METHOD FOR DETERMINING AT LEAST ONE POWER LIMIT OF A HYBRID DRIVE TRAIN FOR A TRANSPORT VEHICLE, IN PARTICULAR AN AIRCRAFT

(30) Priorité: 10.11.2020 FR 2011522
(43) Date de publication de la demande: 20.09.2023
(73) Titulaire: Safran Helicopter Engines, 64510 Bordes (FR)
(72) Inventeur: LEMAY, David Bernard Martin, 77550 MOISSY-CRAMAYEL (FR); MARIN, Jean-Philippe Jacques, 77550 MOISSY-CRAMAYEL (FR)
(74) Mandataire: Argyma
(86) Numéro de dépôt international: PCT/EP2021/080910
(87) Numéro de publication internationale: WO 2022/101129

(56) Documents cités:
- EP-A1- 3 095 695
- EP-A1- 3 647 192
- US-B2- 6 411 869

## Description

### Domaine technique

La présente invention concerne le domaine de la propulsion hybride d'un véhicule de transport, en particulier, un aéronef. De manière connue, il a été proposé d'équiper un aéronef avec une chaine propulsive hybride comportant plusieurs sources de puissance différentes pour entrainer une pluralité d'éléments propulsifs, en particulier, au moins une turbomachine et au moins une batterie électrique. Une telle chaine propulsive hybride permet à un aéronef de transporter des biens et des marchandises de manière optimale en limitant les nuisances sonores et la consommation de carburant tout en améliorant la sécurité.

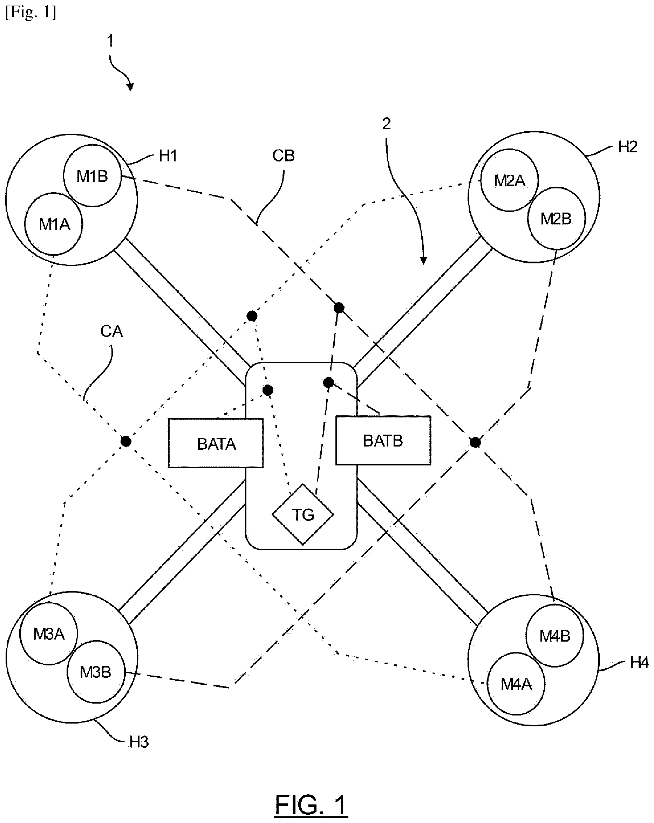

A titre d'exemple, en référence à la [Fig.1], il est représenté de manière générale un aéronef 1 comprenant une chaine propulsive hybride 2 qui comprend quatre éléments propulsifs H1-H4, en particulier, des hélices. Chaque élément propulsif H1-H4 est relié à deux moteurs électriques pour permettre son entrainement : un moteur primaire M1A-M4A et un moteur secondaire M1B-M4B. Comme illustré à la [Fig.1], les moteurs primaires M1A-M4A sont reliés électriquement à une batterie primaire BATA via un canal primaire CA tandis que les moteurs secondaires M1B-M4B sont reliés électriquement à une batterie secondaire BATB via un canal secondaire CB. La chaine propulsive hybride 2 comporte un turbogénérateur TG, comprenant une turbomachine à gaz, pour alimenter électriquement les moteurs électriques M1A-M4A, M1B-M4B et les batteries BAT, BATB via les canaux CA, CB. Dans cet exemple, la propulsion est dite hybride-série.

De manière connue, une chaine propulsive hybride 2 peut adopter différentes architectures, en particulier :
- une architecture série dans laquelle la turbomachine à gaz ne produit que de la puissance électrique (turbogénérateur) afin d'alimenter les canaux et recharger les batteries.
- une architecture parallèle dans laquelle la turbomachine à gaz ne produit que de la puissance mécanique pour entraîner des éléments propulsifs. La puissance électrique est fournie par des batteries qui peuvent être rechargées par les machines électriques utilisées alors à la fois comme moteur et comme générateur.
- une architecture série et parallèle dans laquelle la puissance produite par la turbomachine à gaz est utilisée à la fois sous forme mécanique pour entraîner des éléments propulsifs et sous forme électrique pour alimenter des moteurs électriques ou recharger des batteries. Cette architecture intègre des caractéristiques de l'hybridation série et de l'hybridation parallèle.

Chaque chaine propulsive hybride possède des limitations de puissance qui dépendent de nombreux paramètres, en particulier, de son architecture, du couple maximum sur la turbomachine à gaz, du courant alternatif maximum du turbogénérateur, du courant maximum fourni sur un canal lors de la génération électrique, le courant électrique maximum que peut délivrer la batterie, le courant électrique maximum auquel un moteur propulsif peut fonctionner, etc. Autrement dit, la détermination d'une limite de puissance de la chaine propulsive hybride est difficile à déterminer.

En outre, une chaîne propulsive hybride 2 est également conçue pour fonctionner selon plusieurs configurations afin de pallier aux pannes de certaines sources d'énergie. A titre d'exemples, la chaîne propulsive hybride peut fonctionner selon :
- une configuration nominale avec toutes les sources disponibles, pouvant fournir une partie de la puissance demandée.
- une configuration sur batteries BATA, BATB uniquement en cas de panne du turbogénérateur TG.
- une configuration sur turbogénérateur TG en cas de panne d'une batterie BATA, BATB.

Sur tout aéronef, la fourniture de la puissance requise par le pilote (humain ou automatique) est fortement critique pour la sécurité du vol puisque c'est elle qui assure la sustentation de l'aéronef. Ce caractère critique est encore accentué sur un aéronef du type VTOL (aéronef à décollage/atterrissage vertical) car la puissance développée par chaque élément propulsif participe non seulement à la sustentation, mais également au contrôle de l'attitude de l'aéronef et donc directement à la stabilité du vol.

Le respect de ces demandes de puissance peut, dans certains cas, entrer en conflit avec certaines limites de performance de la chaine propulsive. Lorsque cette situation se présente, la chaine propulsive ne peut plus satisfaire la demande et peut soit se protéger en continuant à assurer un service mais en limitant la puissance délivrée, soit suivre la demande de puissance jusqu'à déclencher un dispositif de protection qui conduit potentiellement à une coupure partielle ou totale de puissance.

Quel que soit le comportement de la chaine propulsive, le pilote peut être « surpris » par le refus (ou la perte) de délivrer la puissance demandée. Cela peut être préjudiciable si celui est en train de réaliser une manoeuvre « complexe » ou critique. En effet, ce dernier peut difficilement compenser le manque de puissance, ce qui aurait pour conséquence d'affecter la sécurité du vol.

Pour éliminer cet inconvénient, une solution immédiate consiste à surdimensionner la capacité de puissance de la chaine propulsive afin de posséder une grande marge de sécurité dans toutes les conditions d'utilisation et toutes les configurations. Une telle solution ne peut pas être retenue car elle impacte la masse de la chaine propulsive et donc réduit la masse embarquable par l'aéronef.

Un des objectifs de la présente invention est de permettre au pilote (humain ou automatique) de déterminer de manière permanente la marge de puissance disponible de la chaine propulsive hybride afin de pouvoir déterminer les commandes de pilotage pouvant être réalisées tout en assurant la sécurité du vol de l'aéronef.

On connaît dans l'art antérieur par les droits de brevet US6411869B2, EP3647192A1 et EP3095695A1 plusieurs méthodes de détermination d'une marge de puissance.

### PRESENTATION DE L'INVENTION

L'invention concerne un procédé de détermination d'au moins une marge de puissance minimale d'une chaine propulsive hybride pour véhicule de transport, en particulier un aéronef, la chaine propulsive comprenant une pluralité de sources de puissance de natures différentes, une pluralité de consommateurs de puissance et une pluralité d'éléments propulsifs, chaque élément propulsif étant associé à au moins une source de puissance et à au moins un consommateur de puissance, le procédé comprenant :
- une étape d'acquisition de mesures d'une pluralité de paramètres de puissance de la chaine propulsive hybride, au moins deux mesures étant exprimées selon des grandeurs différentes,
- une étape de comparaison de chaque mesure à au moins un seuil de limitation, déterminé respectivement pour chaque paramètre de puissance à partir d'une base de données de seuils, de manière à en déduire au moins une marge brute de puissance pour ledit paramètre de puissance,
- une étape de conversion, à partir d'une base de données de transformation, des marges brutes de puissance desdits paramètres de puissance en marges affinées de puissance exprimées selon une même grandeur commune,
- une étape de transposition, à partir d'une base de données de rendements, des marges affinées de puissance en marges normalisées de puissance en au moins un point de référence de la chaine propulsive hybride, la base de données de rendements déterminant les rendements des interfaces entre un point d'acquisition et un point de référence,
- une étape de détermination d'une marge de puissance de source, à partir des marges normalisées de puissance des sources audit point de référence, et d'une marge de puissance de consommateur, à partir des marges normalisées de puissance des consommateurs audit point de référence,
- une étape de détermination de la marge de puissance minimale par sélection de la marge de puissance la plus faible entre la marge de puissance de consommateur et la marge de puissance de source audit point de référence.

En l'absence de « visibilité » sur les marges de puissance disponibles, un système de pilotage (humain ou automatique) peut être amené à engager des manoeuvres sur-sollicitantes pour une partie des éléments de la chaine propulsive. Grâce à l'invention, la connaissance à tout instant des marges disponibles permet au système de pilotage de planifier des manoeuvres réalisables tout en restant dans le domaine de puissance disponible.

Par hybride, on entend que la chaine propulsive comporte une pluralité de sources de puissance de natures différentes, par exemple, au moins une source thermique (une turbomachine thermique ou autre) et au moins une source électrique (une batterie électrique, une pile à hydrogène ou autre).

Par point de référence, on entend un point physique de la chaine de propulsion.

Les consommateurs de puissance sont configurés pour consommer de la puissance et sont par exemple des moteurs, en particulier, électriques. Les consommateurs de puissance sont configurés pour alimenter les éléments propulsifs, en particulier, pour les entrainer en rotation. Les consommateurs de puissance sont par exemple des moteurs électriques d'entrainement des éléments propulsifs.

Comme évoqué précédemment, le calcul des marges de puissance instantanées est particulièrement complexe pour une chaine de propulsion hybride ayant des grandeurs physiques nombreuses et hétérogènes (couples et vitesse mécanique, courants alternatifs, courant et tension continues, etc) et des technologies variées dont les limitations dépendent de facteurs indépendants (pression et température atmosphérique pour les moteurs thermiques, niveau de charge et température pour les batteries, niveau de tension pour les équipement électriques). Grâce aux étapes selon l'invention, les différents paramètres de puissance sont traités de manière méthodique afin de les évaluer en un même point de référence afin d'obtenir une marge de puissance minimale pertinente.

De manière préférée, la marge de puissance de source est obtenue par une somme pondérée des marges normalisées de puissance des sources audit point de référence. De manière préférée, des facteurs de pondération permettent de tenir compte de l'architecture globale (répartition des sources de puissance et distribution de celle-ci sur les consommateurs).

De manière préférée, la marge de puissance de consommateur est obtenue par une somme pondérée des marges normalisées de puissance des consommateurs audit point de référence. De manière préférée, des facteurs de pondération permettent de tenir compte de l'architecture globale (répartition des sources de puissance et distribution de celle-ci sur les consommateurs).

De préférence, le ou les points de référence correspondent à un ou plusieurs éléments propulsifs. Cela est particulièrement pertinent pour un système de pilotage qui souhaite connaître la puissance disponible au niveau des éléments propulsifs (la puissance utile pour mouvoir l'aéronef). Il faut donc tenir compte des rendements énergétiques des différents organes de transmission. Ces rendements peuvent eux aussi varier en fonction des conditions d'utilisation du système (ex : selon le niveau de puissance, température des équipements électriques, etc).

De préférence, lorsqu'une source de puissance alimente plusieurs consommateurs de puissance en parallèle, il est pris comme hypothèse que la puissance totale reçue en un noeud est répartie de manière égale entre les consommateurs de puissance.

De manière alternative, lorsqu'une source de puissance alimente plusieurs consommateurs de puissance en parallèle, la puissance totale reçue en un noeud est répartie de manière pondérée entre les consommateurs de puissance, de préférence, en fonction de la puissance nominale de chaque consommateur. Une telle répartition est pertinente lorsque les consommateurs ont des puissances nominales très différentes.

De manière préférée, pour un aéronef, les marges de puissance individuelle sont regroupées selon les axes principaux de l'aéronef de manière à indiquer des marges en roulis, tangage, lacet.

Selon un aspect préféré, la chaine propulsive comporte au moins un turbogénérateur et au moins une batterie électrique comme sources de puissance.

Selon un aspect préféré, la chaine propulsive comporte une pluralité de moteurs électriques comme consommateurs de puissance.

L'invention concerne également une méthode de pilotage d'un véhicule de transport, en particulier un aéronef, comportant une chaine propulsive hybride, au moyen d'un système de pilotage, la méthode comprenant :
- une étape de détermination d'un ordre de pilotage du véhicule de transport, en particulier de l'aéronef, par le système de pilotage, l'ordre de pilotage étant associé à un besoin en puissance,
- une étape de détermination d'au moins une marge de puissance minimale de la chaine propulsive par un procédé tel que présenté précédemment, et
- une étape de validation de l'ordre de pilotage si le besoin en puissance est inférieur à la marge de puissance minimale.

Grâce à la méthode de pilotage, les ordres de pilotage sont validés dynamiquement avant d'être mis en oeuvre, ce qui évite de solliciter de manière excessive la chaine propulsive.

L'invention concerne également une chaine propulsive hybride pour véhicule de transport, en particulier un aéronef, la chaine propulsive comprenant une pluralité de sources de puissance de natures différentes, une pluralité de consommateurs de puissance et une pluralité d'éléments propulsifs, chaque élément propulsif étant associé à au moins une source de puissance et à au moins un consommateur de puissance, la chaine propulsive comprenant au moins un calculateur configuré pour :
- acquérir des mesures d'une pluralité de paramètres de puissance de la chaine propulsive hybride, au moins deux mesures étant exprimées selon des grandeurs différentes,
- comparer chaque mesure à au moins un seuil de limitation, déterminé respectivement pour chaque paramètre de puissance à partir d'une base de données de seuils, de manière à en déduire au moins une marge brute de puissance pour ledit paramètre de puissance,
- convertir, à partir d'une base de données de transformation, des marges brutes de puissance desdits paramètres de puissance en marges affinées de puissance exprimées selon une même grandeur commune,
- transposer, à partir d'une base de données de rendements, des marges affinées de puissance en marges normalisées de puissance en au moins un point de référence de la chaine propulsive hybride, la base de données de rendements déterminant les rendements des organes de transmission entre un point d'acquisition et un point de référence,
- déterminer une marge de puissance de source, à partir des marges normalisées de puissance des sources audit point de référence, et d'une marge de puissance de consommateur, à partir des marges normalisées de puissance des consommateurs audit point de référence,
- déterminer la marge de puissance minimale par sélection de la marge de puissance la plus faible entre la marge de puissance de consommateur et la marge de puissance de source audit point de référence.

La base de données de transformation et la base de données de rendements sont accessibles par le calculateur, de préférence, enregistrées dans ledit calculateur.

L'invention concerne également un véhicule de transport, en particulier un aéronef, comportant au moins une chaine propulsive hybride telle que présentée précédemment.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
[Fig.1] La [Fig.1] est une représentation schématique de dessus d'une chaine propulsive d'un aéronef.
[Fig.2] La [Fig.2] est une représentation détaillée d'une chaine propulsive d'un aéronef.
[Fig.3] La [Fig.3] est une représentation schématique des étapes du procédé de détermination d'une limite de puissance d'une chaine propulsive hybride pour aéronef.
[Fig.4] La [Fig.4] est une représentation schématique d'un exemple d'une étape d'acquisition.
[Fig.5] La [Fig.5] est une représentation schématique d'une étape de détermination de marges brutes.
[Fig.6] La [Fig.6] est une représentation schématique de détermination d'une marge de puissance à partir de marges de puissance normalisée exprimées pour un premier élément propulsif et
[Fig.7] La [Fig.7] est une représentation schématique d'une méthode de pilotage utilisant la marge individuelle de puissance.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention concerne un procédé de détermination d'une limite de puissance d'une chaine propulsive hybride pour un véhicule de transport, en particulier un aéronef. De manière préférée, en référence à la [Fig.1], la chaine propulsive hybride 2, ci-après « chaine propulsive 2 », comporte une pluralité de sources de puissance de natures différentes (système hybride). De préférence, l'invention s'applique pour une chaine propulsive 2 qui est distribuée, c'est-à-dire, qui comporte une pluralité de consommateurs de puissance (système distribué).

Comme présenté précédemment, une chaine propulsive hybride peut présenter diverses architectures. A titre d'exemple, en référence à la [Fig.1], il a été présenté une chaine propulsive hybride 2, du type hybride-série, comportant quatre élément propulsifs H1-H4, en particulier, des hélices. Chaque élément propulsif H1-H4 est associé à au moins une source de puissance et à au moins un consommateur de puissance.

Dans cet exemple, chaque élément propulsif H1-H4 est relié à deux moteurs électriques pour permettre son entrainement : un moteur primaire M1A-M4A et un moteur secondaire M1B-M4B. Les moteurs primaires M1A-M4A sont reliés électriquement à une batterie primaire BATA via un canal primaire CA tandis que les moteurs secondaires M1B-M4B sont reliés électriquement à une batterie secondaire BATB via un canal secondaire CB. La chaine propulsive 2 comporte un turbogénérateur TG pour alimenter électriquement les moteurs électriques M1A-M4A, M1B-M4B et les batteries BAT, BATB via les canaux CA, CB. Il a été présenté un turbogénérateur TG ainsi que des batteries électriques mais l'invention s'applique à toute source de puissance, en particulier, une pile à combustible ou un stockeur d'énergie électrique (super capacité, batterie électrochimique, etc.).

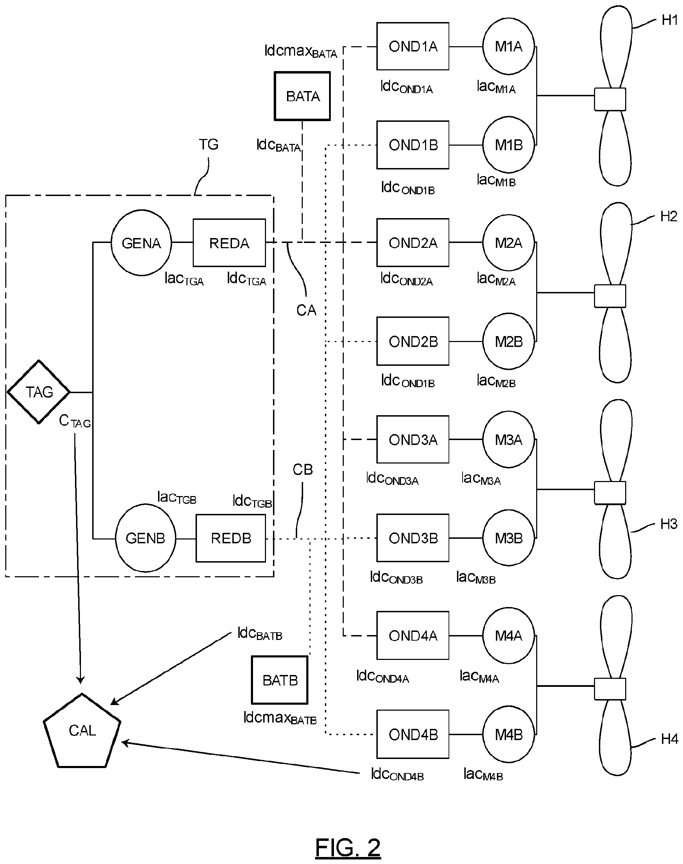

En référence à la [Fig.2], il est représenté de manière plus détaillée la chaine propulsive 2 de la [Fig.1]. Le turbogénérateur TG comprend une turbine à gaz TAG entrainant deux génératrices électriques GENA, GENB (une génératrice primaire GENA et une génératrice secondaire GENB). La turbomachine TAG comporte dans cet exemple un arbre basse pression et un arbre haute pression connus de l'homme du métier. De manière connue, dans cet exemple, le turbogénérateur TG produit de la puissance électrique continue à partir de la combustion de carburant. Chaque génératrice électrique GENA, GENB transforme cette puissance mécanique en tension et en courant électriques alternatifs Iac_{TGA}, Iac_{TGB}. Le turbogénérateur TG comporte également deux redresseurs REDA, REDB afin de fournir au canal primaire CA et au canal secondaire CB des tensions et des courants électriques continus Idc_{TGA}, Idc_{TGB}.

Les canaux CA, CB sont également alimentés par les deux batteries BATA, BATB qui fournissent chacune un courant continu Idc_{BATA}, Idc_{BATB}. De préférence, chaque batterie BATA, BATB est équipée d'un système de contrôle et de monitoring (BMS) qui détermine le courant maximum Idcmax_{BATA}, Idcmax_{BATB} ([Fig.2]) qu'elle peut délivrer à chaque instant. Ce courant maximum varie donc dans le temps et selon les conditions de fonctionnement. Les deux canaux CA, CB sont indépendants et comportent chacun un noeud combinant les courants électriques provenant de la batterie BATA, BATB et du turbogénérateur TG pour distribuer la puissance électrique vers au moins deux moteurs électriques chacun, dans cet exemple, huit moteurs électriques M1A-M4A, M1B-M4B.

Toujours en référence à la [Fig.2], le canal primaire CA, alimente quatre moteurs électriques M1A-M4A à travers quatre onduleurs OND1A-OND4A qui transforment la puissance électrique continue en tensions et courants alternatifs Iac_{M1A}-Iac_{M4A}. De manière analogue, le canal secondaire CB, alimente quatre moteurs électriques M1B-M4B à travers quatre onduleurs OND1B-OND4B qui transforment la puissance électrique continue en tensions et courants alternatifs Iac_{M1B}-Iac_{M4B}. Chaque élément propulsif H1-H4 est ainsi entraîné par deux moteurs électriques M1A/M1B-M4A/M4B tournant à une vitesse proportionnelle à celle de l'élément propulsif H1-H4 et fournissant chacun un couple mécanique. Le couple d'entrainement de chaque élément propulsif H1-H4 est la somme des couples fournis par chacun des deux moteurs accouplés M1A/M1B-M4A/M4B.

En référence à la [Fig.2], la chaine propulsive 2 comporte un calculateur moteur CAL contrôlant les organes de la chaine propulsive 2 et acquérant des paramètres de puissance desdits organes afin de calculer des marges en puissance. Le calculateur moteur CAL est relié à un ou plusieurs calculateurs de l'aéronef afin de permettre de communiquer avec le système de pilotage de l'aéronef.

De manière connue, une chaine propulsive 2 comporte une pluralité de paramètres de puissance PARi qui sont identifiés pour ladite chaine propulsive 2. Les paramètres de puissance PARi sont par exemple :
- La vitesse de rotation N1_{TAG} de l'arbre haute pression de la turbine à gaz TAG. Cette mesure, combinée aux mesures de la pression P0atm et de la température Tlatm atmosphériques, permet d'acquérir une image de la puissance aérodynamique générée par la turbine à gaz TAG.
- La température des gaz T4_{TAG} de la turbine à gaz TAG.
- Le couple C_{TAG} d'entrainement des génératrices électriques GENA, GENB ainsi que la vitesse de rotation de l'arbre d'entrainement basse pression N2_{TAG}. On obtient ainsi, de ces 2 mesures, une image de la puissance mécanique produite par la turbine à gaz TAG.
- Les courants électriques alternatifs Iac_{TGA}, Iac_{TGB} des deux génératrices GENA, GENB.
- Les courants électriques continus Idc_{TGA}, Idc_{TGB} en sortie des redresseurs électriques REDA, REDB.
- La tension continue mesurée au point de référence des deux canaux CA, CB.
- Les courants électriques continus Idc_{BATA}, Idc_{BATB} issus des batteries BATA, BATB. Par convention, on considère le courant positif lorsqu'il est délivré par la batterie et négatif lorsqu'il la recharge.
- Les courants électriques alternatifs Iac_{M1A}-Iac_{M4A}/ Iac_{M1B}-Iac_{M4B} de tous les moteurs électriques M1A-M4A, M1B-M4B.
- La température de chaque moteur électrique M1A-M4A, M1B-M4B.
- La vitesse de rotation de chaque élément propulsif H1-H4.

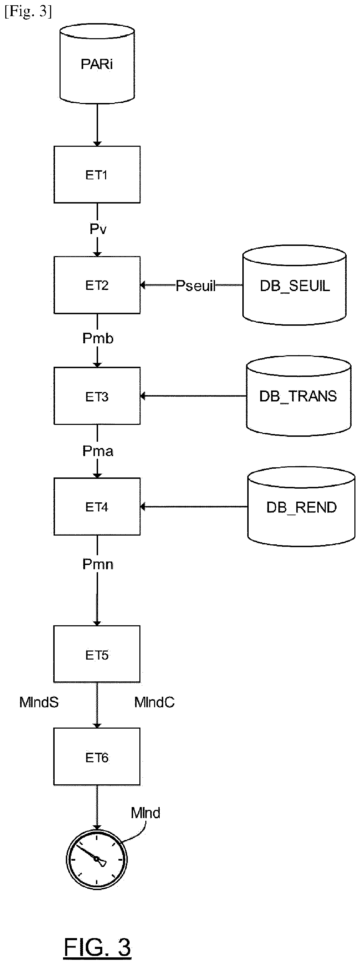

En référence à la [Fig.3], le procédé comporte une étape d'acquisition ET1 de mesures Pv d'une pluralité de paramètres de puissance PARi de la chaine propulsive 2. De manière préférée, plusieurs mesures Pv sont exprimées selon des grandeurs différentes. L'étape d'acquisition ET1 est réalisée de manière connue à partir de capteurs de différentes natures qui sont reliés au calculateur moteur CAL.

A titre d'exemple, les mesures Pv sont notamment :
- le couple C_{TAG} de la turbine à gaz TAG à son point de fonctionnement actuel, le couple C_{TAG} étant exprimé en Newton-mètres.
- les courants électriques alternatifs Iac_{TGA}, Iac_{TGB} des deux génératrices GENA, GENB, les courants étant exprimés en ampères.
- la température de chaque moteur électrique M1A-M4A, M1B-M4B, la température étant exprimée en degrés.

Le procédé comporte une étape de comparaison ET2 de chaque mesure Pv à un seuil de puissance Pseuil, déterminé respectivement pour chaque paramètre de puissance PAR, de manière à en déduire une marge brute de puissance Pmb pour ledit paramètre de puissance PAR.

Dans cet exemple de mise en oeuvre, chaque paramètre de puissance PARi est associé à un seuil de puissance Pseuil dans une base de données de seuils DB_SEUIL. La base de données de seuils DB_SEUIL est accessible par le calculateur moteur CAL qui peut ainsi déterminer la marge brute de puissance Pmb pour chaque paramètre de puissance PAR. De préférence, les seuils de puissance Pseuil sont indépendants des points de fonctionnement de la chaine propulsive. Une telle propriété d'indépendance est avantageuse pour que les marges de puissance calculées aient une valeur prédictive (et donc indépendante des futures manoeuvres aéronefs et, par conséquent, indépendantes des futurs points de fonctionnent de la chaine propulsive).

De manière préférée, chaque seuil de puissance Pseuil est propre à un paramètre de puissance PARi dans ladite chaine propulsive hybride et, de préférence, propre audit point de fonctionnement et à la configuration de fonctionnement. Aussi, chaque paramètre de puissance PARi est associé à un seuil de puissance Pseuil pour chaque point de fonctionnement et chaque configuration de fonctionnement dans la base de données de seuils DB_SEUIL.

De préférence, ledit seuil de puissance Pseuil est exprimé dans la même grandeur que la mesure Pv, ce qui permet, par simple calcul de différence, de déterminer la marge brute de puissance Pmb exprimée dans la même grandeur.

Dans cet exemple, on obtient avantageusement :
- la marge brute de couple de la turbine à gaz TAG par comparaison à un couple maximal de la turbine à gaz TAG à son point de fonctionnement, la marge de couple étant exprimée en Newton-mètres,
- la marge brute de courant délivré par chaque générateur électrique GENA, GENB, la marge de courant étant exprimée en ampères et
- la marge brute de température de chaque moteur électrique M1A-M4A, M1B-M4B, la marge de température étant exprimée en degrés.

Le calcul d'une marge de puissance globale de la TAG peut être complexe, notamment en présence d'architectures série-parallèles où une part significative de puissance est prélevée à la fois sur une turbine libre et sur un générateur de gaz. Le pilote a alors besoin de connaître la marge de puissance disponible sur chacune des deux branches afin de pouvoir ajuster sa demande en fonction. Dans ce cas, il est proposé de calculer la marge brute de puissance pour chaque sortie de la turbine à gaz TAG. A titre d'exemple, pour une architecture dans laquelle la turbine libre de la turbine à gaz TAG fournit de la puissance mécanique aux éléments propulsifs H1-H4 et où la puissance électrique est extraite du générateur de gaz TAG. On calcule la marge de puissance mécanique sur la turbine libre à iso prélèvement sur le générateur de gaz (iso puissance électrique) et la marge de puissance électrique (sur le générateur de gaz) à iso prélèvement mécanique sur la turbine libre.

Le procédé comporte une étape de conversion ET3, à partir d'une base de données de rapports de transformation DB_TRANSF, des marges brutes de puissance Pmb desdits paramètres de puissance PARi en marges affinées de puissance Pma exprimées selon une même grandeur commune. Autrement dit, alors que les marges brutes de puissance Pmb sont exprimées dans des grandeurs différentes (Newton-mètres, ampères ou degrés), les marges affinées de puissance Pma sont toutes exprimées dans la même grandeur, ce qui permet de les traiter ensemble. Les marges affinées de puissance Pma sont toutes exprimées dans une même grandeur homogène.

Cette grandeur homogène est de préférence exprimée en Watts car elle permet de déterminer une puissance pour les éléments propulsifs H1-H4. Il va de soi que la grandeur homogène pourrait être différente, en particulier, un couple ou des ampères.

De manière avantageuse, la base de données de rapports de transformation DB_TRANS est propre à la chaine propulsive hybride 2 et détermine les rapports de transformation entre les paramètres de puissance PARi entre eux. De manière préférée, les rapports de transformation sont déterminés de manière théorique par modélisation énergétique de la chaine propulsive hybride 2. De manière préférée, chaque rapport de transformation se présente sous la forme d'au moins une équation mathématique qui dépend du point de fonctionnement et de la configuration de la chaine propulsive hybride 2. On peut ainsi déterminer l'impact causé par une variation de courant ou de température sur un canal en termes de couple sur les éléments propulsifs H1-H4. Dans cet exemple, la base de données de rapports de transformation DB_TRANS est mémorisée dans le calculateur moteur CAL sous forme de tables(s).

Dans cet exemple, la marge brute de courant délivré par chaque générateur électrique GENA, GENB et la marge brute de température de chaque moteur électrique M1A-M4A, M1B-M4B sont respectivement transformées en marges affinées de puissance Pma qui sont exprimées en watts.

Le procédé comporte une étape de transposition ET4, à partir d'une base de données de rapports de rendements DB_REND, des marges affinées de puissance Pma, ci-après désignées « marges affinées Pma », pour chaque paramètre de puissance PARi en marges normalisées de puissance Pmn en un ou plusieurs points de référence de la chaine propulsive 2, ci-après désignées « marges normalisées Pmn ». De préférence, les rapports de rendements DB_REND sont indépendants des points de fonctionnement de la chaine propulsive.

Dans cet exemple, les points de référence sont choisis de manière à être les plus proches possibles de là où la puissance est réellement utile au pilotage de l'aéronef, c'est-à-dire au plus près des éléments propulsifs H1-H4. Un point de référence préféré est par exemple la puissance mécanique disponible sur les éléments propulsifs H1-H4. Il va néanmoins de soi que les points de référence pourraient être choisis différemment en fonction des besoins ou de la spécificité de la chaine propulsive 2.

De manière avantageuse, la base de données de rendements DB_REND est propre à la chaine propulsive 2 et détermine les rapports de rendements entre les paramètres de puissance entre eux, en particulier en fonction des organes de transmission entre un point d'acquisition et un point de référence. De manière préférée, les rapports de rendement sont déterminés de manière théorique par modélisation énergétique de la chaine propulsive hybride 2. De manière préférée, chaque rapport de rendement se présente sous la forme d'au moins une équation mathématique qui dépend du point de fonctionnement et de la configuration de la chaine propulsive hybride 2. On peut ainsi transposer une marge affinée Pma obtenue en un point donné de la chaine propulsive hybride 2 en un même point de référence afin de déterminer la marge réelle pour ledit point de référence. Dans cet exemple, la base de données de rendements DB_REND est mémorisée dans le calculateur moteur CAL sous forme de tables(s) pouvant dépendre d'autres paramètres mesurés, par exemple, le niveau de courant moyen et la tension des canaux.

A titre d'exemple, les transpositions suivantes peuvent être réalisées. La marge affinée Pma de couple de la turbine à gaz TAG, exprimée initialement sur l'arbre d'entrainement des génératrices électriques GENA, GENB, est transposée sur les arbres d'entrainement des éléments propulsifs H1-H4 (point de référence) à partir :
- des rapports de rendement de la transformation des génératrices GENA, GENB et de leurs redresseurs REDA, REDB qui sont dans cet exemple, de 90%,
- des rapports de rendement du transport de la puissance électrique dans les canaux CANA, CANB, qui sont, dans cet exemple, de 95%,
- du rapport de rendement des moteurs électriques M1A-M4A, M1B-M4B et de leur onduleur OND1A-OND4A, OND1B-OND4B qui est, dans cet exemple, de 93%.

Ainsi, une marge affinée Pma de couple de la turbine à gaz TAG est transposée avec un facteur de rendement de 80% (90%*95%*93%) sur les arbres d'entrainement des éléments propulsifs H1-H4 pour déterminer la marge normalisée Pmn.

De manière analogue, la marge affinée Pma de puissance de batterie BATA, BATB, exprimée initialement à leur bornier de connexion électrique, est transposée sur les arbres d'entrainement des éléments propulsifs H1-H4 (point de référence) à partir :
- des rapports de rendement du transport de la puissance électrique dans les canaux CA, CB, qui sont, dans cet exemple, de 95%, et
- du rapport de rendement des moteurs électriques M1A-M4A, M1B-M4B et de leur onduleur OND1A-OND4A, OND1B-OND4B qui est, dans cet exemple, de 93%.

Ainsi, une marge affinée de puissance Pma de batterie BATA-BATB est transposée avec un facteur de rendement de 88% (95%*93%) sur les arbres d'entrainement des éléments propulsifs H1-H4 pour déterminer la marge normalisée Pmn. Ainsi, plus le point de référence est éloigné du lieu de mesure, plus le nombre de rendements à prendre en compte est important.

Aussi, pour une même valeur de marge affinée de puissance Pma, exprimée en watt, de 50 kW de couple de la turbine à gaz et de 50 kW de de puissance de batterie, la valeur normalisée Pmn est différente sur les arbres d'entrainement des éléments propulsifs H1-H4 (c'est à dire au point de référence) (marge normalisée de turbine à gaz : 50*0.80 = 40 kW ; marge normalisée batterie : 50*0.85 = 42.5 kW).

Toujours en référence à la [Fig.3], le procédé comporte une étape de détermination ET5 d'une marge de puissance de source pour chaque point de référence et d'une marge de puissance de consommateur pour chaque point de référence. Il a été présenté des marges de puissance pour les sources et les consommateurs mais il va de soi que des marges de puissance pourraient également être calculées pour des organes de transfert de puissance, par exemple, un câble électrique ou un arbre de transmission.

Dans cet exemple, les marges de puissance sont déterminées pour chaque élément propulsif H1-H4. On parle de marges individuelles Mind. Ainsi, on obtient autant de marges individuelles Mind que de points de référence, dans cet exemple, au nombre de 4.

En un point de référence donné (un élément propulsif donné H1-H4), la marge de puissance de source est obtenue en additionnant les marges normalisées des sources alimentant ledit élément propulsif, à savoir, les batteries BATA, BATB et la turbine à gaz TAG dans notre exemple. La marge de puissance de source MIndS dépend de la répartition des sources sur les éléments propulsifs ainsi que de la configuration de la chaine de propulsion hybride (disponibilité ou indisponibilité de sources). Lorsque des sources de puissance n'alimentent qu'une partie des éléments propulsifs H1-H4, on sélectionne celle qui dispose de la marge normalisée la plus faible.

Autrement dit, pour chaque point de référence H1-H4, il suffit de remonter la chaine de puissance jusqu'aux sources primaires (batteries, turbogénérateur, etc.) en prenant en compte les possibles limitations (marges) de chaque organe de transfert de puissance rencontré sur le parcours.

Lorsqu'une source alimente plusieurs consommateurs en parallèle, il est pris comme hypothèse que la puissance totale est répartie de manière égale entre chaque consommateur en parallèle. Cette hypothèse d'équi-répartition se vérifie de manière avantageuse par le fait que la topologie de l'aéronef et de son système propulsif sont symétriques autour d'un centre de gravité. Néanmoins, il va de soi qu'une hypothèse de répartition pondérée pourrait être mise en oeuvre lorsque les consommateurs ont des puissances nominales très différentes.

De manière analogue, en point un point de référence donné, la marge individuelle de puissance de consommateur MIndC est obtenue en additionnant les marges normalisées des consommateurs prélevant de la puissance au point de référence, à savoir, les moteurs M1A-M4A, M1B-M4B. Pour déterminer la marge individuelle de puissance MInd, on réalise une étape de sélection ET6 de la marge individuelle de puissance minimale entre la marge individuelle de puissance de consommateur MIndC et la marge individuelle de puissance de source MIndS. Dans le présent exemple, comme cela sera détaillé par la suite, la marge individuelle de puissance de consommateur MIndC est limitative.

La sélection des marges individuelles MInd est réalisée en remontant la chaine de puissance alimentant un élément de puissance donné, en sélectionnant les marges de l'élément offrant le moins de puissance.

Lorsqu'une source alimente plusieurs consommateurs, il est important de prendre en compte cette répartition ainsi que la puissance individuelle de chaque consommateur en fonction des modes. A titre d'exemple, une source peut délivrer 100kW et alimenter deux moteurs qui peuvent fournir chacun 60kW. Dans ce cas la puissance potentiellement disponible sur chaque hélice est de 60 kW, mais la puissance totale disponible est limitée à 100kW au total des 2 hélices, car limitée par la source. Ainsi, selon la solution préférée de l'invention, la marge individuelle de chaque hélice serait de 50kW.

A titre d'exemple, pour déterminer la marge individuelle de puissance MInd :
- on sélectionne la marge normalisée de couple minimum parmi celle provenant de la turbine à gaz TAG et celles provenant de chacun des générateurs GENA, GENB et on indique la marge de couple propulsif global.
- on sélectionne la marge normalisée de couple minimum parmi les différents facteurs limitants d'un moteur M1A-M4A, M1B-M4B, comme la limite en température, la limite en courant de l'onduleur, ou la limite en courant de l'alimentation électrique dédiée au moteur M1A-M4A, M1B-M4B.

Une marge de puissance individuelle MInd pour chaque élément propulsif H1-H4 permet d'informer le pilote de la puissance propulsive disponible pour agir sur l'attitude de l'aéronef, contribuant ainsi à la stabilisation du vol (ex : la marge de puissance sur chaque moteur du côté droit renseigne sur la capacité de l'aéronef à imprimer un mouvement de roulis à gauche). De manière avantageuse, dans l'hypothèse d'équi-répartition, il suffit au pilote de respecter l'ensemble des marges de puissance individuelle pour valider une loi de pilotage.

De manière alternative, lorsque les éléments propulsifs ont des puissances nominales très différentes, la puissance totale reçue en un noeud est répartie de manière pondérée entre les éléments propulsifs.

Plusieurs types d'indication sont possibles en fonction des préférences du système de pilotage. On a choisi, dans l'exemple précédent, une marge individuelle MInd par élément propulsif H1-H4. Ces indications ont l'avantage d'offrir une très bonne visibilité sur la « pilotabilité » de l'aéronef au système de pilotage.

On peut aussi regrouper les marges de puissance individuelle MInd par axe principal de l'aéronef et ainsi indiquer des marges en roulis, tangage, lacet. Cette solution fournit des indications plus synthétiques et « mises en forme » dans un référentiel bien connu du système de pilotage.

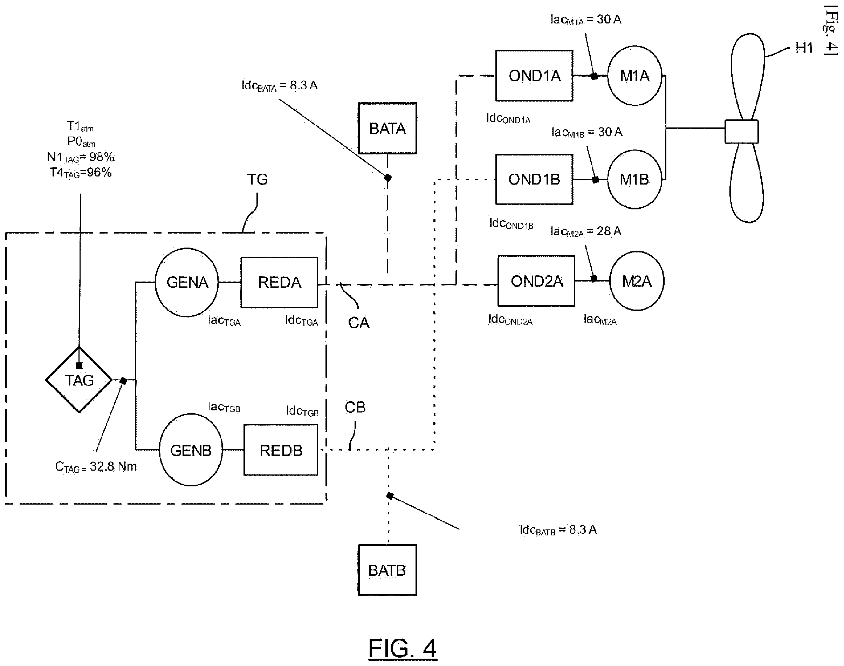

Un exemple de mise en oeuvre détaillée va être présenté en référence à la [Fig.4].

Dans cet exemple, en référence à la [Fig.4], on a réalisé une étape d'acquisition ET1 de mesures Pv d'une pluralité de paramètres de puissance PARi de la chaine propulsive hybride 2, en particulier, au niveau de la turbine à gaz TAG, des batteries BATA, BATB et des moteurs M1A-M4A, M1B-M4B.

On réalise ensuite une étape de comparaison ET2 de chaque mesure à plusieurs seuils de limitation, c'est-à-dire, à des limites éprouvées. De préférence, les seuils de limitation correspondent à des durées pendant lesquelles le paramètre de puissance PARi peut être maintenu. C'est notamment le cas pour les paramètres de la turbine à gaz TAG pour laquelle on distingue classiquement au moins deux régimes de fonctionnement :
- un seuil de régime PMD, pour puissance maximum de décollage, qui peut être maintenue pendant une durée limitée, généralement, entre 10mn et 30mn
- un seuil de régime PMC, pour puissance maximum continue, qui peut être maintenue indéfiniment.

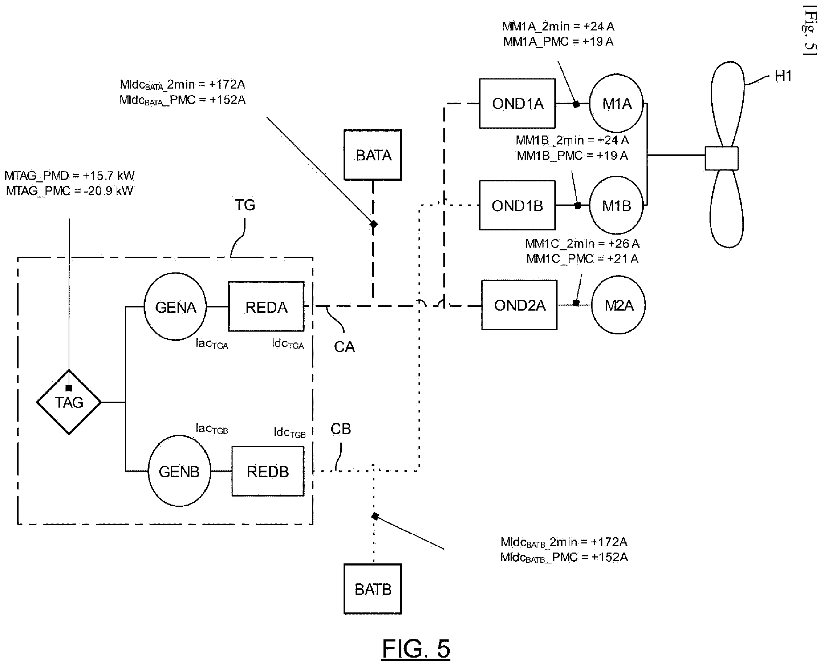

Il va de soi que d'autres seuils pourraient être prévus, par exemple, des régimes d'urgence permettant d'atteindre des niveaux de puissance supérieurs mais dont la durée peut être limitée. De manière analogue, certains équipements de puissance électriques peuvent également avoir plusieurs limites en courant pouvant être maintenues plus ou moins longtemps. On calcule ainsi la marge qui sépare chaque paramètre à sa (ses) limite(s) certifiée(s). A titre d'exemple, en référence à la [Fig.5], on calcule ainsi les marges suivantes :
- Dans les conditions atmosphériques P0atm, Tlatm mesurées du moment, les limites de la vitesse N1TAG de la turbine à gaz TAG correspondant aux régimes PMD (durée de 10 mn) et PMC sont respectivement 100% et 95%. Pour une mesure de 98%, les marges brutes en N1TAG de chaque régime sont donc : MN1_PMD = +2%, MN1_PMC=-3%.

- De même pour la température d'entrainement des turbines T4TAG, les limites des régimes PMD et PMC sont respectivement 100% et 94%. Pour une mesure de 96%, les marges brutes de température T4TAG sont donc : MT4_PMD = +4% et MT4_PMC = -2%.
- La limite de couple C_{TAG} généré par la turbine à gaz TAG est unique et vaut 40 Nm. Pour une mesure de 32,8 Nm, la marge brute de couple est donc MCT = +7.2 Nm.
- La limite de courant de la batterie BATA est de 160 A continu et de 180 A pendant 2 mn. On calcule donc également 2 marges en courant pour la batterie BATA : la marge brute limitée à 2 mn MIdcBATA_2mn = +172 A et la marge brute continue MIdcBATA_PMC = 152 A. Il en va de même pour la batterie secondaire BATB.
- La limite de courant alternatif des moteurs électriques M1A-M4A, M1B-M4B est de 49 A permanent et de 54 A pendant 2 mn. On calcule 2 marges brutes en courant pour chaque moteur :
   - Moteur 1A : pour une mesure de courant IacMlA de 30 A, la marge brute limitée à 2 mn MM1A_2mn = +24 A et la marge brute continue MM1A_PMC = +19 A.
   - Moteur 1B : pour une mesure de courant IacMlB de 30 A, la marge brute limitée à 2 mn MM1B_2mn = +24 A et la marge brute continue MM1B_PMC = +19 A.
   - Moteur 2A : pour une mesure de courant IacM2A de 28 A, la marge brute limitée à 2 mn MM2A_2mn = +26 A et la marge brute continue MM2A_PMC = +21 A.

On procède de même pour les autres équipements du système jusqu'à obtenir les marges de tous les paramètres

On réalise ensuite une étape de conversion ET3 et une étape de transposition ET4 de chacune des marges calculées à l'étape précédente en une grandeur homogène localisée en un ou plusieurs points de référence, de préférence, en sortie du système de propulsion hybride. Dans cet exemple, le point de référence est le premier élément propulsif H1.

Pour les limites de la turbine à gaz TAG, au point de fonctionnement courant, le modèle de cette dernière permet de convertir les marges de N1_{TAG} et T4_{TAG} en marges de puissance équivalente en sortie de turbine. A l'aide de ce modèle, le calculateur CAL détermine les conversions suivantes :
- MN1_PMD = +15.7 kW et MN1_PMC = -20.9 kW
- MT4_PMD = +17.8 kW et MT4_PMC = -18.3 kW
- MCT = +18.8 kW (PMD et PMC)

A l'issue de ces conversions, le procédé sélectionne la marge minimum en couple de la turbine à gaz TAG. Dans le présent exemple, les marges minimales globales en couple sont: MTAG_PMD = +15.7 kW, MTAG_PMC = -20.9 kW (limité par le N1TAG dans cet exemple) ([Fig.5]).

Le procédé transpose ensuite cette marge globale de la turbine à gaz TAG aux éléments propulsifs H1-H4 en suivant la chaîne de puissance et en appliquant les rendements successifs de chaque organe de transmission.

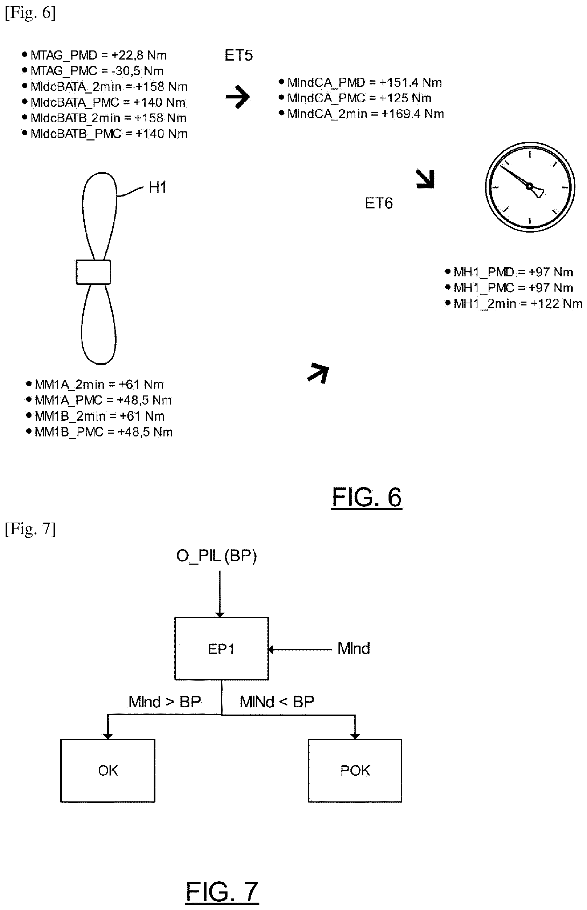

En référence à la [Fig.6], appliqué à notre exemple au point de référence du premier élément propulsif H1, selon une hypothèse d'iso-répartition au noeud de connexion des moteurs M1A, M2A, les marges minimales MTAG_PMD, MTAG_PMC de la turbine à gaz TAG deviennent alors :
- MTAG_PMD = +11.4 Nm
- MTAG_PMC = -15 Nm

Pour les marges de la batterie primaire BATA, la marge en courant continue est d'abord convertie en puissance électrique disponible en sortie de la batterie à l'aide de la mesure de tension Vdc du canal primaire CANA qu'elle alimente. Les marges exprimées en puissance valent donc :
- la marge limitée à 2 mn MIdcBATA_2mn = +103 kW
- et la marge continue MIdcBATA_PMC = 91.2 kW

La transposition de ces marges en couple disponible aux éléments propulsifs H1-H4, en tenant compte des rendements de la chaine propulsive donne alors :
- MIdcBATA_2mn = +158 Nm
- MIdcBATA_PMC = +140 Nm

Les limites des moteurs M1A-M4A, M1B-M4B sont également converties en marges de couple disponible sur chaque élément propulsif H1-H4 en utilisant un modèle du moteur électrique. Sur l'exemple, cette conversion donne les résultats suivants :
- Moteur 1A : MM1A_2mn = +61 Nm et MM1A_PMC = +48.5 Nm.
- Moteur 1B : MM1B_2mn = +61 Nm et MM1B_PMC = +48.5 Nm.
- Moteur 2A : MM2A_2mn = +66 Nm et MM2A_PMC = +53.6 Nm.

Dans cet exemple, il est décrit une architecture propulsive dans une situation nominale (sans panne) où toutes les sources de puissance (batteries BATA, BATB, turbine à gaz TAG) alimentent tous les éléments propulsifs H1-H4, il n'y a donc pas à sélectionner une source de puissance plus limitante que les autres.

La marge de puissance individuelle au noeud de jonction de la batterie BATA (resp. BATB) sur le canal de puissance primaire CA (resp. CB), noté MindCA, correspond donc à la somme des marges de la batterie et du turbogénérateur, réparti uniformément sur les 4 moteurs (M1A-M4A) alimentés par ce canal primaire. On obtient les relations suivantes :
- MindCA_2mn = MTAG_PMD + MIdcBATA_2mn
- MindCA_2mn = 11.4 Nm + 158 Nm = +169.4 Nm
- MindCA_PMD = MTAG_PMD + MIdcBATA_PMC
- MindCA_PMD = 11.4 Nm + 140 Nm = +151.4 Nm
- MindCA_PMC = MTAG_PMC + MIdcBATA_PMC
- MindCA_PMC = -15 Nm + 140 Nm = +125 Nm

On procède de même pour les marges MindCB du canal secondaire CB.

De manière préférée, lorsqu'un des organes n'a pas de limite de puissance propre sur un horizon temporel donné, le procédé utilise la marge de puissance de l'horizon temporel immédiatement supérieur. Par exemple, la marge PMD de la turbine à gaz TAG pour le calcul de la marge MindCA_2 mn. De manière analogue, la marge PMC des batteries BATA, BATB est utilisée pour le calcul de la marge MindCA_PMD.

Enfin, le procédé comporte une étape de comparaison des marges de puissance des sources aux marges de puissance des consommateurs. Dans la situation nominale de l'exemple, c'est la marge de puissance des moteurs qui est la plus faible. On applique donc la limitation correspondant à l'élément propulsif disposant des marges les plus faibles. Les marges de puissance du système de propulsion indiquées selon le procédé de l'invention sont donc :
- MH1_2mn = min(MindCA_2mn ; MM1A_2mn) + min(MindCB_2mn ; MM1B_2mn)
- MH1_2mn = +122 Nm = min(169.4 Nm; 61 Nm) + min(169.4 ; 61 Nm)
- MH1_PMD = min(MindCA_PMD ; MM1A_PMD) + min(MindCB_PMD ; MM1B_PMD)
- MH1_PMD = +97 Nm = min(151.4 Nm; 48.5 Nm) + min(151.4 ; 48.5 Nm)
- MH1_PMC = min(MindCA_PMC ; MM1A_PMC) + min(MindCB_PMC ; MM1B_PMC)
- MH1_PMC = +97 Nm = min(125 Nm; 48.5 Nm) + min(125 ; 48.5 Nm)

Sans détailler les calculs analogues à précédemment, en supposant que les moteurs M2A-M2B disposent des mêmes marges en puissance, on obtient, à titre d'exemple, les résultats suivants
- MH2_2mn = 132 Nm ; MH2_PMD = 107 Nm ; MH2_PMC = 107 Nm

Comme illustré à la [Fig.3], les différentes marges individuelles de puissance peuvent être affichées sur le tableau de bord de l'aéronef pour informer le pilote de sa réserve de puissance et des manoeuvres pouvant être réalisées. Les différentes marges de puissance peuvent également être stockées sur le calculateur moteur CAL afin d'être utilisées par un pilote automatique.

L'interprétation que l'on peut faire de ces marges est que le pilote dispose d'une réserve de puissance instantanée correspondant à un couple de +122 Nm pendant une durée de 2 mn, et de +97 Nm permanent sur l'hélice H1, pour réaliser toutes les manoeuvres possibles, que ce soit pour accélérer ou prendre de l'altitude ou pour modifier l'attitude de l'aéronef. Le pilote doit répartir cette marge de puissance disponible entre ces différentes possibilités de manoeuvre de sorte à ce que la manoeuvre globale respecte l'ensemble des marges individuelles de toutes les hélices.

Le pilote a également conscience qu'il pourra réaliser toutes les manoeuvres qu'il voudra, sans limitation, tant qu'il conserve simultanément des marges individuelles positives.

De manière avantageuse, on peut mettre en oeuvre de manière sécurisée une méthode de pilotage d'un aéronef, comportant une chaine propulsive hybride, au moyen d'un système de pilotage qui peut être manuel ou automatique.

En référence à la [Fig.7], le système de pilotage est configuré pour déterminer un ordre de pilotage O_PIL de l'aéronef qui est associé à un besoin en puissance BP. En effet, de manière connue, chaque ordre de pilotage O_PIL requiert plus ou moins de puissance en fonction de la nature de l'ordre (évitement, décollage, accélération, etc.).

La méthode de pilotage comporte une étape de détermination d'au moins une marge de puissance minimale de la chaine propulsive par un procédé tel que présenté précédemment, en particulier, la marge individuelle de puissance minimale MInd.

La méthode de pilotage comporte une étape de validation de l'ordre de pilotage O_PIL si le besoin en puissance BP est inférieur à la marge de puissance minimale MInd et, de préférence, une étape de rejet de l'ordre de pilotage O_PIL si le besoin en puissance BP est supérieur à la marge de puissance minimale MInd. Ainsi, on s'assure de manière réactive, par anticipation, des ordres de pilotage O_PIL qui peuvent être acceptés de manière dynamique au cours du vol de l'aéronef.

## Revendications

1. Procédé de détermination d'au moins une marge de puissance minimale d'une chaine propulsive (2) hybride pour véhicule de transport, en particulier un aéronef, la chaine propulsive (2) comprenant une pluralité de sources de puissance de natures différentes, une pluralité de consommateurs de puissance et une pluralité d'éléments propulsifs (H1-H4), chaque élément propulsif (H1-H4) étant associé à au moins une source de puissance et à au moins un consommateur de puissance, le procédé comprenant :
• une étape d'acquisition (ET1) de mesures (Pv) d'une pluralité de paramètres de puissance (PARi) de la chaine propulsive hybride (2), au moins deux mesures (Pv) étant exprimées selon des grandeurs différentes,
• une étape de comparaison (ET2) de chaque mesure (Pv) à au moins un seuil de limitation (Pseuil), déterminé respectivement pour chaque paramètre de puissance (PARi) à partir d'une base de données de seuils (DB_SEUIL), de manière à en déduire au moins une marge brute de puissance (Pmb) pour ledit paramètre de puissance (PARi),
• une étape de conversion (ET3), à partir d'une base de données de transformation (DB_TRANS), des marges brutes de puissance (Pmb) desdits paramètres de puissance (PARi) en marges affinées de puissance (Pma) exprimées selon une même grandeur commune,
• une étape de transposition (ET4), à partir d'une base de données de rendements (DB_REND), des marges affinées de puissance (Pma) en marges normalisées de puissance (Pmn) en au moins un point de référence de la chaine propulsive hybride (2), la base de données de rendements (DB_REND) déterminant les rendements des organes de transmission entre un point d'acquisition et un point de référence,
• une étape de détermination (ET5) d'une marge de puissance de source (MIndS), à partir des marges normalisées de puissance (Pmn) des sources audit point de référence, et d'une marge de puissance de consommateur (MIndC), à partir des marges normalisées de puissance (Pmn) des consommateurs audit point de référence,
• une étape de détermination (ET6) de la marge de puissance minimale (MInd) par sélection de la marge de puissance la plus faible entre la marge de puissance de consommateur (MIndC) et la marge de puissance de source (MIndS) audit point de référence.

2. Procédé selon la revendication 1, dans lequel, le ou les points de référence correspondent à un ou plusieurs éléments propulsifs (H1-H4).

3. Procédé selon l'une des revendications 1 à 2, dans lequel, lorsqu'une source de puissance alimente plusieurs consommateurs de puissance en parallèle, il est pris comme hypothèse que la puissance totale reçue en un noeud est répartie de manière égale entre les consommateurs de puissance.

4. Procédé selon l'une des revendications 1 à 2, dans lequel, lorsqu'une source de puissance alimente plusieurs consommateurs de puissance en parallèle, la puissance totale reçue en un noeud est répartie de manière pondérée entre les consommateurs de puissance, de préférence, en fonction de la puissance nominale de chaque consommateur.

5. Procédé selon l'une des revendications 1 à 4, dans lequel la chaine propulsive (2) comporte au moins un turbogénérateur (TG) et au moins une batterie électrique (BATA, BATB) comme sources de puissance.

6. Procédé selon l'une des revendications 1 à 5, dans lequel la chaine propulsive (2) comporte une pluralité de moteurs électriques (M1A-M4A, M1B-M4B) comme consommateurs de puissance.

7. Procédé selon l'une des revendications 1 à 6, dans lequel, pour un aéronef, les marges de puissance individuelle (Mind) sont regroupées selon les axes principaux de l'aéronef de manière à indiquer des marges en roulis, tangage, lacet.

8. Méthode de pilotage d'un véhicule de transport, en particulier un aéronef, comportant une chaine propulsive hybride, au moyen d'un système de pilotage, la méthode comprenant :
• une étape de détermination d'un ordre de pilotage du véhicule de transport par le système de pilotage, l'ordre de pilotage étant associé à un besoin en puissance,
• une étape de détermination d'au moins une marge de puissance minimale de la chaine propulsive (2) par un procédé selon l'une des revendications 1 à 7, et
• une étape de validation de l'ordre de pilotage si le besoin en puissance est inférieur à la marge de puissance minimale.

9. Chaine propulsive hybride pour véhicule de transport, en particulier un aéronef, la chaine propulsive (2) comprenant une pluralité de sources de puissance de natures différentes, une pluralité de consommateurs de puissance et une pluralité d'éléments propulsifs (H1-H4), chaque élément propulsif (H1-H4) étant associé à au moins une source de puissance et à au moins un consommateur de puissance, la chaine propulsive (2) comprenant au moins un calculateur (CAL) et des bases de données (DB_SEUIL, DB_TRANS, DB_REND) accessibles par le calculateur (CAL), le calculateur (CAL) étant configuré pour :
• acquérir (ET1) des mesures (Pv) d'une pluralité de paramètres de puissance (PARi) de la chaine propulsive hybride (2), au moins deux mesures (Pv) étant exprimées selon des grandeurs différentes,
• comparer (ET2) chaque mesure (Pv) à au moins un seuil de limitation (Pseuil), déterminé respectivement pour chaque paramètre de puissance (PARi) à partir d'une base de données de seuils (DB_SEUIL), de manière à en déduire au moins une marge brute de puissance (Pmb) pour ledit paramètre de puissance (PARi),
• convertir (ET3), à partir d'une base de données de transformation (DB_TRANS), des marges brutes de puissance (Pmb) desdits paramètres de puissance (PARi) en marges affinées de puissance (Pma) exprimées selon une même grandeur commune,
• transposer (ET4), à partir d'une base de données de rendements (DB_REND), des marges affinées de puissance (Pma) en marges normalisées de puissance (Pmn) en au moins un point de référence de la chaine propulsive hybride, la base de données de rendements (DB_REND) déterminant les rendements des organes de transmission entre un point d'acquisition et un point de référence,
• déterminer (ET5) une marge de puissance de source (MIndS), à partir des marges normalisées de puissance (Pmn) des sources audit point de référence, et d'une marge de puissance de consommateur (MIndC), à partir des marges normalisées de puissance (Pmn) des consommateurs audit point de référence,
• déterminer (ET6) la marge de puissance minimale (MInd) par sélection de la marge de puissance la plus faible entre la marge de puissance de consommateur (MIndC) et la marge de puissance de source (MIndS) audit point de référence.

10. Véhicule de transport, notamment aéronef comportant au moins une chaine propulsive hybride selon la revendication 9.

## Patentansprüche

1. Verfahren zur Bestimmung mindestens eines minimalen Leistungsbereichs eines Hybridantriebsstrangs (2) für ein Transportfahrzeug, insbesondere ein Flugzeug, wobei der Antriebsstrang (2) eine Vielzahl von Leistungsquellen unterschiedlicher Art, eine Vielzahl von Leistungsverbrauchern und eine Vielzahl von Antriebselementen (H1-H4) umfasst, wobei jedes Antriebselement (H1-H4) mindestens einer Leistungsquelle und mindestens einem Leistungsverbraucher zugeordnet ist, wobei das Verfahren umfasst:
• einen Schritt des Erfassens (ET1) von Messungen (Pv) einer Vielzahl von Leistungsparametern (PARi) des Hybridantriebsstrangs (2), wobei mindestens zwei Messungen (Pv) gemäß unterschiedlichen Größen ausgedrückt sind,
• einen Schritt des Vergleichens (ET2) jeder Messung (Pv) mit mindestens einem Begrenzungsgrenzwert (Pseuil), der jeweils für jeden Leistungsparameter (PARi), ausgehend von einer Grenzwertdatenbank (DB_SEUIL) derart bestimmt wird, dass daraus mindestens ein Roh-Leistungsbereich (Pmb) für den Leistungsparameter (PARi) abgeleitet wird,
• einen Schritt des Umwandelns (ET3), ausgehend von einer Transformationsdatenbank (DB_TRANS), der Roh-Leistungsbereiche (Pmb) der Leistungsparameter (PARi) in verfeinerte Leistungsbereiche (Pma), ausgedrückt gemäß einer gleichen gemeinsamen Größe,
• einen Schritt des Überführens (ET4), ausgehend von einer Effizienzdatenbank (DB_REND), der verfeinerten Leistungsbereiche (Pma) in Standard-Leistungsbereiche (Pmn) an mindestens einem Bezugspunkt des Hybridantriebsstrangs (2), wobei die Effizienzdatenbank (DB_REND) die Effizienz der Übertragungsorgane zwischen einem Erfassungspunkt und einem Bezugspunkt bestimmt,
• einen Schritt des Bestimmens (ET5) eines Quell-Leistungsbereichs (MlndS), ausgehend von den Standard-Leistungsbereichen (Pmn) der Quellen an dem Bezugspunkt, und eines Verbraucher-Leistungsbereichs (MlndC), ausgehend von den Standard-Leistungsbereichen (Pmn) der Verbraucher an dem Bezugspunkt,
• einen Schritt des Bestimmens (ET6) des minimalen Leistungsbereichs (Mlnd) durch Auswahl des schwächsten Leistungsbereichs aus dem Verbraucher-Leistungsbereich (MlndC) und dem Quell-Leistungsbereich (MlndS) an dem Bezugspunkt.

2. Verfahren nach Anspruch 1, wobei der oder die Bezugspunkte einem oder mehreren Antriebselementen (H1-H4) entsprechen.

3. Verfahren nach einem der Ansprüche 1 bis 2, wobei, wenn eine Leistungsquelle mehrere Leistungsverbraucher parallel versorgt, hypothetisch angenommen wird, dass die in einem Knoten empfangene Gesamtleistung zwischen den Leistungsverbrauchern gleich verteilt wird.

4. Verfahren nach einem der Ansprüche 1 bis 2, wobei, wenn eine Leistungsquelle mehrere Leistungsverbraucher parallel versorgt, die in einem Knoten empfangene Gesamtleistung zwischen den Leistungsverbrauchern gewichtet, vorzugsweise in Abhängigkeit von der Standardleistung jedes Verbrauchers, verteilt wird.

5. Verfahren nach einem der Ansprüche 1 bis 4, wobei der Antriebsstrang (2) mindestens einen Turbogenerator (TG) und mindestens eine elektrische Batterie (BATA, BATB) als Leistungsquellen aufweist.

6. Verfahren nach einem der Ansprüche 1 bis 5, wobei der Antriebsstrang (2) eine Vielzahl von Elektromotoren (M1A-M4A, M1B-M4B) als Leistungsverbraucher aufweist.

7. Verfahren nach einem der Ansprüche 1 bis 6, wobei für ein Flugzeug die individuellen Leistungsbereiche (Mind) gemäß den Hauptachsen des Flugzeugs derart gruppiert sind, dass die Bereiche für Rollen, Neigen und Gieren angegeben werden.

8. Methode zum Steuern eines Transportfahrzeugs, insbesondere eines Flugzeugs, aufweisend einen Hybridantriebsstrang, mittels eines Steuersystems, wobei die Methode umfasst:
• einen Schritt des Bestimmens eines Lenkbefehls des Transportfahrzeugs durch das Lenksystem, wobei der Lenkbefehl einem Leistungsbedarf zugeordnet ist,
• einen Schritt des Bestimmens mindestens eines minimalen Leistungsbereichs des Antriebsstrangs (2) durch ein Verfahren nach einem der Ansprüche 1 bis 7, und
• einen Schritt des Bestätigens des Lenkbefehls, wenn der Leistungsbedarf unter dem minimalen Leistungsbereich liegt.

9. Hybridantriebsstrang für Transportfahrzeug, insbesondere ein Flugzeug, wobei der Antriebsstrang (2) eine Vielzahl von Leistungsquellen unterschiedlicher Art, eine Vielzahl von Leistungsverbrauchern und eine Vielzahl von Antriebselementen (H1-H4) umfasst, wobei jedes Antriebselement (H1-H4) mindestens einer Leistungsquelle und mindestens einem Leistungsverbraucher zugeordnet ist, wobei der Antriebsstrang (2) mindestens einen Rechner (CAL) und Datenbanken (DB_SEUIL, DB_TRANS, DB_REND) umfasst, die von dem Rechner (CAL) erreichbar sind, wobei der Rechner (CAL) ausgelegt ist, um:
• Messungen (Pv) einer Vielzahl von Leistungsparametern (PARi) des Hybridantriebsstrangs (2) zu erfassen (ET1), wobei mindestens zwei Messungen (Pv) gemäß unterschiedlichen Größen ausgedrückt sind,
• jede Messung (Pv) mit mindestens einem Begrenzungsgrenzwert (Pseuil) zu vergleichen (ET2), der jeweils für jeden Leistungsparameter (PARi) ausgehend von einer Grenzwertdatenbank (DB_SEUIL) derart bestimmt wird, dass daraus mindestens ein Roh-Leistungsbereich (Pmb) für den Leistungsparameter (PARi) abgeleitet wird,
• ausgehend von einer Transformationsdatenbank (DB_TRANS) Roh-Leistungsbereiche (Pmb) der Leistungsparameter (PARi) in verfeinerte Leistungsbereiche (Pma), ausgedrückt gemäß einer gleichen gemeinsamen Größe, umzuwandeln (ET3),
• ausgehend von einer Effizienzdatenbank (DB_REND) verfeinerte Leistungsbereiche (Pma) in Standard-Leistungsbereiche (Pmn) an mindestens einem Bezugspunkt des Hybridantriebsstrangs (2) zu überführen (ET4), wobei die Effizienzdatenbank (DB_REND) die Effizienz der Übertragungsorgane zwischen einem Erfassungspunkt und einem Bezugspunkt bestimmt,
• einen Quell-Leistungsbereich (MlndS), ausgehend von den Standard-Leistungsbereichen (Pmn) der Quellen an dem Bezugspunkt, und einen Verbraucher-Leistungsbereich (MlndC), ausgehend von den Standard-Leistungsbereichen (Pmn) der Verbraucher an dem Bezugspunkt, zu bestimmen (ET5),
• den minimalen Leistungsbereich (Mlnd) durch Auswahl des schwächsten Leistungsbereichs aus dem Verbraucher-Leistungsbereich (MlndC) und dem Quell-Leistungsbereich (MlndS) an dem Bezugspunkt zu bestimmen (ET6).

10. Transportfahrzeug, insbesondere Flugzeug, das mindestens einen Hybridantriebsstrang nach Anspruch 9 aufweist.

## Claims

1. Method for determining at least one minimum power margin of a hybrid drive train (2) for a transport vehicle, in particular an aircraft, the drive train (2) comprising a plurality of power sources of different natures, a plurality of power consumers and a plurality of drive elements (H1-H4), each drive element (H1-H4) being associated with at least one power source and at least one power consumer, the method comprising:
- a step of acquiring (ET1) measurements (Pv) of a plurality of power parameters (PARi) of the hybrid drive train (2), at least two measurements (Pv) being expressed according to different magnitudes.
- a step of comparing (ET2) each measurement (Pv) with at least one limitation threshold (Pseuil), determined respectively for each power parameter (PARi) from a threshold database (DB_SEUIL), in order to deduce therefrom at least one gross power margin (Pmb) for said power parameter (PARi),
- a step of converting (ET3), from a transformation database (DB_TRANS), the gross power margins (Pmb) of said power parameters (PARi) into refined power margins (Pma) expressed according to the same common magnitude,
- a step of transposing (ET4), from a yield database (DB_REND), refined power margins (Pma) into standardized power margins (Pmn) at at least one reference point of the hybrid drive train (2), the yield database (DB_REND) determining the yields of the transmission member between an acquisition point and a reference point,
- a step of determining (ET5) a source power margin (MIndS), from the standardized power margins (Pmn) of the sources at said reference point, and a consumer power margin (MIndC), from the standardized power margins (Pmn) of the consumers at said reference point.
- a step of determining (ET6) the minimum power margin (Mind) by selecting the lowest power margin between the consumer power margin (MlndC) and the source power margin (MIndS) at said reference point.

2. Method according to claim 1, wherein the reference point(s) correspond to one or more drive elements (H1-H4).

3. Method according to any one of claims 1 to 2, wherein, when a power source supplies several power consumers in parallel, it is assumed that the total power received in a node is equally distributed among the power consumers.

4. Method according to any one of claims 1 to 2, wherein, when a power source supplies several power consumers in parallel, the total power received in a node is distributed in a weighted manner among the power consumers, preferably according to the nominal power of each consumer.

5. Method according to one of claims 1 to 4, wherein the drive train (2) comprises at least one turbogenerator (TG) and at least one electric battery (BATA, BATB) as power sources.

6. Method according to any one of claims 1 to 5, wherein the drive train (2) comprises a plurality of electric motors (M 1A-M4A, M1B-M4B) as power consumers.

7. Method according to any one of claims 1 to 6, wherein, for an aircraft, the individual power margins (Mind) are grouped along the main axes of the aircraft so as to indicate roll, pitch, yaw margins.

8. Method of controlling a transport vehicle, in particular an aircraft, comprising a hybrid drive train, by means of a control system, the method comprising:
- a step of determining a control order of the transport vehicle by the control system, the control order being associated with a power requirement,
- a step of determining at least one minimum power margin of the drive train (2) by a method according to one of claims 1 to 7, and
- a step of validating the control order if the power requirement is less than the minimum power margin.

9. Hybrid drive train for transport vehicle, in particular an aircraft, the drive train (2) comprising a plurality of power sources, a plurality of power consumers and a plurality of drive elements (H1-H4), each drive element (H1-H4) being associated with at least one power source and at least one power consumer, the drive train (2) comprising at least one calculator (CAL) and databases (DB_SEUIL, DB_TRANS, DB_REND) accessible by the calculator (CAL), the calculator (CAL) being configured to:
- acquire (ET1) measurements (Pv) of a plurality of power parameters (PARi) of the hybrid drive train (2), at least two measurements (Pv) being expressed according to different magnitudes,
- compare (ET2) each measurement (Pv) with at least one limitation threshold (Pseuil), determined respectively for each power parameter (PARi) from a threshold database (DB_SEUIL), so as to deduce therefrom at least one gross power margin (Pmb) for said power parameter (PARi),
- convert (ET3), from a transformation database (DB_TRANS), gross power margins (Pmb) of said power parameters (PARi) into refined power margins (Pma) expressed according to the same common magnitude,
- transpose (ET4), from a yield database (DB_REND), refined power margins (Pma) into standardized power margins (Pmn) in at least one reference point, the yield database (DB_REND) determining the yields of the transmission members between an acquisition point and a reference point,
- determine (ET5) a source power margin (MIndS), from the standardized power margins (Pmn) of the sources at the said reference point, and a consumer power margin (MIndC), from the standardized power margins (Pmn) of the consumers at said reference point,
- determine (ET6) the minimum power margin (Mind) by selecting the lowest power margin between the consumer power margin (MlndC) and the source power margin (MIndS) at said reference point.

10. Transport vehicle, in particular an aircraft comprising at least one hybrid drive train according to claim 9.
